# EUROPÄISCHE PATENTANMELDUNG

(11) **EP 3 962 026 A1**
(43) Veröffentlichungstag der Anmeldung: **02.03.2022**
(21) Anmeldenummer: 20193690.3
(22) Anmeldetag: 31.08.2020
(51) Int. Cl.: H04L 29/08, G06F 9/455

(54) **VERFAHREN UND SYSTEM ZUR BEREITSTELLUNG VON ZEITKRITISCHEN DIENSTEN**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)

(57) **Zusammenfassung**

Zur Bereitstellung von zeitkritischen Diensten ist den Diensten jeweils zumindest eine Server-Komponente (111, 121) zugeordnet, die durch eine in eine Ablaufsteuerungsumgebung (102) ladbare und dort ausführbare Ablaufsteuerungskomponente gebildet wird. Für die Server-Komponenten wird jeweils eine Funktionseinheit (113, 123) zur Verarbeitung eines Kommunikationsprotokollstapels verfügbar gemacht, die mit einer der Ablaufsteuerungsumgebung zugeordneten Funktionseinheit (103) zur Verarbeitung eines Kommunikationsprotokollstapels verbunden ist. Die Dienste umfassen jeweils eine Verzeichnisdienst-Komponente (112, 122) zur Ermittlung mittels der Ablaufsteuerungsumgebung bereitgestellter Dienste. Die Verzeichnisdienst-Komponenten werden miteinander über eine separierte Kommunikationsschnittstelle (105) verbunden. Mit der separierten Kommunikationsschnittstelle ist eine mittels einer weiteren Ablaufsteuerungskomponente gebildete Aggregator-Komponente (131) verbunden, die Angaben über die mittels der Server-Komponenten bereitgestellten Dienste außerhalb der Ablaufsteuerungsumgebung verfügbar macht.

## Beschreibung

Die vorliegende Erfindung betrifft ein Verfahren sowie ein System zur Bereitstellung von zeitkritischen Diensten, insbesondere in einem industriellen Automatisierungssystem.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Aus der älteren internationalen Patentanmeldung mit dem Anmeldeaktenzeichen PCT/EP2020/063144 ist ein Verfahren zur Bereitstellung von Steuerungsanwendungen bekannt, bei dem Kommunikationsnetzadressen von Ablaufsteuerungskomponenten, die Steuerungsanwendungen bereitstellen, sowie Identifikatoren der Ablaufsteuerungskomponenten oder von Server-Einrichtungen, auf denen die Ablaufsteuerungskomponenten ausgeführt werden, von einer Überwachungseinrichtung abfragt werden. Aus den abgefragten Kommunikationsnetzadressen und Identifikatoren sowie aus Bezeichnungen der Steuerungsanwendungen erzeugt eine Konfigurationssteuerungseinrichtung Konfigurationsinformationen für eine Weiterleitungseinrichtung. Die Weiterleitungseinrichtung nimmt Anfragen von Endgeräten zur Nutzung der Steuerungsanwendungen entgegen und leitet diese entsprechend den Konfigurationsinformationen an eine jeweilige Ablaufsteuerungskomponente weiter.

In der älteren europäischen Patentanmeldung mit dem Anmeldeaktenzeichen 19166203.0 ist ein Verfahren zur automatischen Konfiguration eines Automatisierungsgeräts beschrieben, bei dem eine Geräte-Management-Einheit überwacht, ob dem Automatisierungsgerät ein Automatisierungssystem-Kenner zugeordnet wird. Wenn die Geräte-Management-Einheit eine solche Zuordnung erkannt hat, fragt sie bei einer zentralen Management-Einheit eines Clusters an, ob in einer Cluster-Zustands-Datenbank mit Beschreibungsobjekten für zumindest einen Knoten des Clusters bereits ein Beschreibungsobjekt existiert, in dem der dem Automatisierungsgerät zugeordnete Automatisierungssystem-Kenner hinterlegt ist. Falls ein solches Beschreibungsobjekt nicht existiert, oder falls ein solches Beschreibungsobjekt existiert, dieses jedoch als inaktiv deklariert ist, erzeugt die Geräte-Management-Einheit in der Cluster-Zustands-Datenbank für einen dem Automatisierungsgerät zugeordneten Knoten-Kenner ein Beschreibungsobjekt, in dem der dem Automatisierungsgerät zugeordnete Automatisierungs-Kenner hinterlegt ist.

Bestehende Diensterkennungsverfahren (service/device discovery), insbesondere für OPC UA, sind primär auf eine Ermittlung von Diensten ausgelegt, die mittels physikalischer oder virtueller, Hypervisor-basierte Maschinen zur Nutzung verfügbar gemacht werden. Insbesondere relativ hohe Betriebs- und Wartungskosten für Hypervisor-basierte virtuelle Maschinen machen Virtualisierungskonzepte mit geringerem Ressourcenbedarf, z.B. Containervirtualisierung, gegenüber zu einer vollständigen Systemvirtualisierung zunehmend attraktiv. Dies gilt auch für industrielle Automatisierungssysteme.

Entsprechend OPC UA-Spezifikationen sind zwar Local Discovery Server (LDS) für OPC-UA basierte Dienste vorgesehen. Allerdings können mittels entsprechender Erkennungsverfahren lediglich jeweils Hosts innerhalb einer Broadcast-Domäne aufgefunden werden. Außerdem wird eine Multicast-Kommunikation innerhalb von Systemen zur Containervirtualisierung üblicherweise blockiert.

Der vorliegenden Erfindung liegt die Aufgabe zugrunde, ein Verfahren zur Bereitstellung von zeitkritischen Diensten zu schaffen, das eine zuverlässige nutzerseitige Ermittlung von mittels Containervirtualisierung oder vergleichbarer Virtualisierungskonzepte bereitgestellten Diensten ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 16 angegebenen Merkmalen gelöst. Vorteilhafte Weiterbildungen sind in den abhängigen Ansprüchen angegeben.

Entsprechend dem erfindungsgemäßen Verfahren zur Bereitstellung von zeitkritischen Diensten ist den Diensten jeweils zumindest eine Server-Komponente zugeordnet, die durch eine in eine Ablaufsteuerungsumgebung ladbare und dort ausführbare Ablaufsteuerungskomponente gebildet wird. Der Ablaufsteuerungsumgebung ist eine erste Funktionseinheit zur Verarbeitung eines Kommunikationsprotokollstapels zugeordnet ist. Für die Server-Komponenten wird jeweils eine zweite Funktionseinheit zur Verarbeitung eines Kommunikationsprotokollstapels verfügbar gemacht, die mit der ersten Funktionseinheit verbunden ist.

Die Ablaufsteuerungskomponenten sind insbesondere Software-Container, die jeweils innerhalb einer von anderen Software-Containern oder Container-Gruppen, z.B. Pods, isolierten Ablaufsteuerungsumgebung auf einem Host-Betriebssystem einer Server-Einrichtung ablaufen. Die Ablaufsteuerungsumgebung kann beispielsweise eine Docker Engine umfassen, die auf einer Server-Einrichtung abläuft. Vorteilhafterweise nutzen die Software-Container jeweils gemeinsam mit anderen auf der jeweiligen Server-Einrichtung ablaufenden Software-Containern einen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Erfindungsgemäß umfassen die Dienste jeweils eine Verzeichnisdienst-Komponente zur Ermittlung mittels der Ablaufsteuerungsumgebung bereitgestellter Dienste. Die Verzeichnisdienst-Komponenten werden miteinander über eine Kommunikationsschnittstelle verbunden, die von der ersten Funktionseinheit separiert ist.

Darüber hinaus ist mit der separierten Kommunikationsschnittstelle erfindungsgemäß eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht. Vorzugsweise werden mittels der Server-Komponenten Dienste bzw. Funktionen eines industriellen Automatisierungssystems bereitgestellt. Dabei können die Dienste jeweils mehrere gleichartige oder identische Server-Komponenten umfassen, die jeweils durch unterschiedliche Server-Einrichtungen bereitgestellt werden.

Die vorliegende Erfindung ermöglicht insbesondere eine Installation und Ausführung mehrerer mittels Ablaufsteuerungskomponenten bereitgestellter Anwendungen gleichzeitig, ohne dass für eine durch Nutzer der Anwendungen initiierte Diensterkennung Konfigurationsarbeiten oder Anpassungen an den Anwendungen erforderlich sind. Damit ergibt sich für Anbieter entsprechender Anwendungen, insbesondere OPC UA Server-Funktionen, eine starke Reduktion ihrer Aufwände für eine Systemintegration, so dass Anwendungen schnell und kostengünstig bereitgestellt werden können.

Für die Aggregator-Komponente wird vorteilhafterweise eine dritte Funktionseinheit zur Verarbeitung eines Kommunikationsprotokollstapels verfügbar gemacht, die mit der ersten Funktionseinheit verbunden ist. Vorzugsweise umfassen die zweiten Funktionseinheiten jeweils einen virtuellen IP-Stack, der mit einem von der ersten Funktionseinheit umfassten IP-Stack bzw. virtuellen Switch verbunden ist. Auf diese Weise ist eine zuverlässige Konnektivität der Server-Komponenten sichergestellt. Insbesondere kann der virtuelle Switch innerhalb der ersten Funktionseinheit durch den IP-Stack gebildet werden. Entsprechend einer bevorzugten Ausgestaltung der vorliegenden Erfindung sind in den die Server-Komponenten bildenden Ablaufsteuerungskomponenten jeweils eine zweite Funktionseinheit und zumindest eine Server-Komponente gekapselt. Dabei werden die Verzeichnisdienst-Komponenten jeweils mittels einer separaten Ablaufsteuerungskomponente gebildet. Die Verzeichnisdienst-Komponenten werden vorteilhafterweise jeweils erzeugt, wenn innerhalb für den jeweiligen Dienst erstmals eine Server-Komponente gestartet wird.

Die Verzeichnisdienst-Komponenten können beispielsweise jeweils mittels einer bidirektionalen Kommunikationsverbindung für eine Inter-Prozess-Kommunikation innerhalb einer Datenverarbeitungseinrichtung oder mittels einer separaten Transportschicht-Verbindung miteinander bzw. mit einem der Aggregator-Komponente zugeordneten Verzeichnisdienst-Client verbunden werden. Auf dieser Grundlage gleichen die Verzeichnisdienst-Komponenten untereinander bzw. mit dem Verzeichnisdienst-Client Angaben über jeweils ermittelte Dienste ab. Vorzugsweise stellt der Verzeichnisdienst-Client die abgeglichenen Angaben außerhalb der Ablaufsteuerungsumgebung bereit. Ein Abgleich der ermittelten Dienste zwischen den Verzeichnisdienst-Komponenten bzw. mit dem Verzeichnisdienst-Client kann zyklisch mittels Polling oder ereignisgesteuert erfolgen.

Entsprechend einer weiteren vorteilhaften Ausgestaltung der vorliegenden Erfindung umfasst die separierte Kommunikationsschnittstelle die bidirektionalen Kommunikationsverbindungen für die Inter-Prozess-Kommunikation bzw. die Transportschicht-Verbindungen. Dabei bildet die separierte Kommunikationsschnittstelle einen Seitenkanal zu einer Kommunikation der Server-Komponenten mit der Ablaufsteuerungsumgebung.

Entsprechend obigen Ausführungen wird die Ablaufsteuerungsumgebung vorteilhafterweise mittels einer Server-Einrichtung bereitgestellt. Dabei können die Ablaufsteuerungskomponenten jeweils von der Server-Einrichtung auf eine andere Server-Einrichtung zur dortigen Ausführung migriert bzw. auf anderen Server-Einrichtungen zeitgleich ausgeführt werden. Vorzugsweise erfasst eine mehreren Server-Einrichtungen zugeordnete Überwachungseinrichtung ein Anlegen, ein Löschen bzw. eine Änderung der Ablaufsteuerungskomponenten. Dabei umfasst das Anlegen, das Löschen bzw. die Änderung der Ablaufsteuerungskomponenten jeweils ein Allokieren oder Freigeben von Ressourcen in der jeweiligen Server-Einrichtung. Darüber hinaus registriert die Überwachungseinrichtung die Dienste mit ihrem jeweiligen Ausführungsstatus. Auf diese Weise können insbesondere voneinander abhängige Dienste zuverlässig orchestriert werden.

Das erfindungsgemäße System zur Bereitstellung von zeitkritischen Diensten ist zur Durchführung eines Verfahrens entsprechend vorangehenden Ausführungen vorgesehen und umfasst eine Ablaufsteuerungsumgebung, eine der Ablaufsteuerungsumgebung zugeordnete erste Funktionseinheit zur Verarbeitung eines Kommunikationsprotokollstapels sowie mehrere, jeweils einem Dienst zugeordnete Server-Komponenten. Die Server-Komponenten sind jeweils durch eine in die Ablaufsteuerungsumgebung ladbare und dort ausführbare Ablaufsteuerungskomponente gebildet. Dabei sind die Server-Komponenten jeweils mit einer zugeordneten zweiten Funktionseinheit zur Verarbeitung eines Kommunikationsprotokollstapels verbunden, die mit der ersten Funktionseinheit verbunden ist.

Darüber hinaus umfasst das erfindungsgemäße System mehrere, jeweils einem Dienst zugeordnete Verzeichnisdienst-Komponenten zur Ermittlung mittels der Ablaufsteuerungsumgebung bereitgestellter Dienste. Die Verzeichnisdienst-Komponenten sind miteinander über eine von der ersten Funktionseinheit separierte Kommunikationsschnittstelle verbunden. Außerdem ist eine mittels einer weiteren Ablaufsteuerungskomponente gebildete Aggregator-Komponente vorgesehen, die mit der separierten Kommunikationsschnittstelle verbunden ist. Die Aggregator-Komponente ist dafür ausgestaltet und eingerichtet, Angaben über die mittels der Server-Komponenten bereitgestellten Dienste außerhalb der Ablaufsteuerungsumgebung verfügbar zu machen.

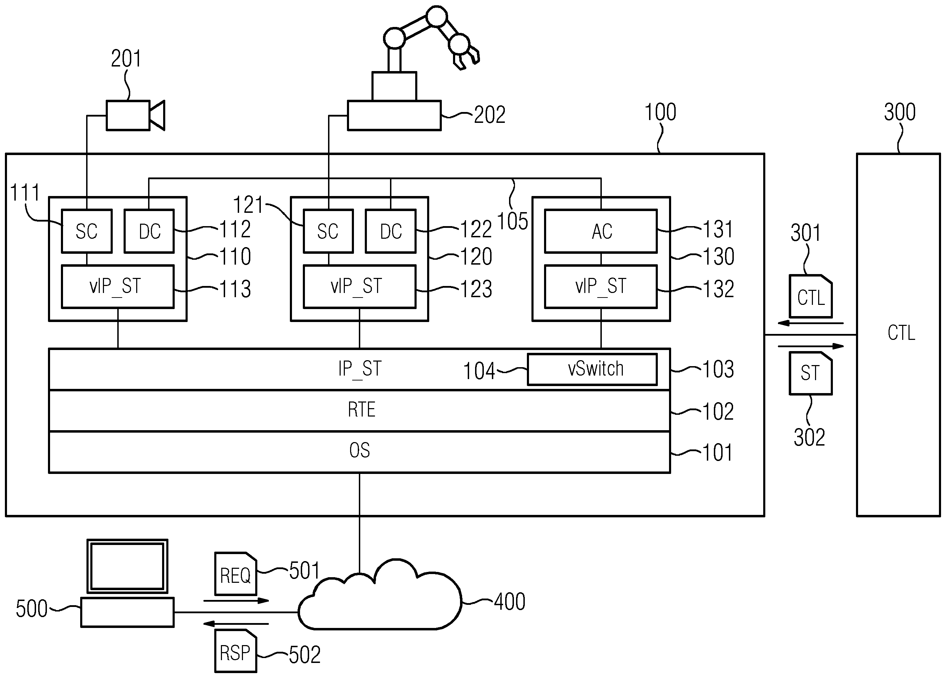

Die vorliegende Erfindung wird nachfolgend an einem Ausführungsbeispiel anhand der Zeichnung näher erläutert. Es zeigt die
- Figur: eine schematische Darstellung einer Anordnung mit einer Server-Einrichtung zur Bereitstellung von Diensten bzw. Steuerungs- und Überwachungsanwendungen eines industriellen Automatisierungssystems über ein Kommunikationsnetz an zumindest einen Benutzer eines Endgeräts.

Die in der Figur dargestellte Anordnung umfasst eine Server-Einrichtung 100 mit mehreren virtuellen Hosts 110, 120, 130 zur Bereitstellung von Diensten bzw. Steuerungs- und Überwachungsanwendungen eines industriellen Automatisierungssystems. Die Dienste bzw. Steuerungs- und Überwachungsanwendungen des industriellen Automatisierungssystems sind exemplarisch für zeitkritische Dienste. Im vorliegenden Ausführungsbeispiel werden die Dienste bzw. Steuerungs- und Überwachungsanwendungen auf Grundlage von OPC UA bereitgestellt. Somit umfassen die Dienste bzw. Steuerungs- und Überwachungsanwendungen Schnittstellendefinitionen, die für einen dauerhaften Zugriff auf die Dienste bzw. Steuerungs- und Überwachungsanwendungen genutzt werden können.

Die Dienste können jeweils mehrere gleichartige oder identische Steuerungs- und Überwachungsanwendungen umfassen, die jeweils durch unterschiedliche Server-Einrichtungen bzw. virtuelle Hosts bereitgestellt werden. Eine Bereitstellung mehrerer gleichartiger Steuerungsanwendungen auf unterschiedlichen Server-Einrichtungen bzw. mittels unterschiedlicher virtueller Hosts gleichzeitig kann beispielsweise mittels Kubernetes-Daemon Sets durch eine Überwachungseinrichtung 200 gesteuert werden, die den Server-Einrichtungen bzw. virtuellen Hosts administrativ zugeordnet ist.

Außerdem umfasst die in der Figur dargestellte Anordnung zumindest ein Endgerät 500, das zumindest einem Benutzer zugeordnet ist, der im vorliegenden Ausführungsbeispiel Anfragen 501 entsprechend OPC UA zur Nutzung der Dienste über ein Kommunikationsnetz 400 an die Server-Einrichtung 100 sendet und von dieser dementsprechend Antworten 502 bzw. Messwerte und Statusmeldungen empfängt. Das Kommunikationsnetz 400 ist vorzugsweise als Time-Sensitive Network ausgestaltet, insbesondere entsprechend IEEE 802.1Q, IEEE 802.1AB, IEEE 802.1AS, IEEE 802.1BA bzw. IEEE 802.1CB.

Die virtuellen Hosts 110, 120 implementieren vorzugsweise Funktionen von Steuerungsgeräten eines industriellen Automatisierungssystems, wie speicherprogrammierbaren Steuerungen, oder von Feldgeräten, wie Sensoren oder Aktoren. Im vorliegenden Ausführungsbeispiel dienen die virtuellen Hosts 110, 120 einem Austausch von Steuerungs- und Messgrößen mit durch die Server-Einrichtung 100 bzw. die virtuellen Hosts 110, 120 gesteuerten Maschinen oder Vorrichtungen 301-302. Insbesondere sind die virtuellen Hosts 110, 120 für eine Ermittlung geeigneter Steuerungsgrößen aus erfassten Messgrößen vorgesehen.

Das Endgerät 500 ist im vorliegenden Ausführungsbeispiel eine Bedien- und Beobachtungsstation und dient zur Visualisierung von Prozessdaten bzw. Mess- und Steuerungsgrößen, die durch die Server-Einrichtung 100 bzw. die virtuellen Hosts 110, 120 oder andere Automatisierungsgeräte verarbeitet bzw. erfasst werden. Insbesondere wird das Endgerät 500 zur Anzeige von Werten eines Regelungskreises und zur Veränderung von Regelungsparametern oder -programmen verwendet.

Den Diensten ist jeweils zumindest eine Server-Komponente 111, 121 zugeordnet, die durch eine in eine Ablaufsteuerungsumgebung 102 ladbare und dort ausführbare Ablaufsteuerungskomponente gebildet wird. Der Ablaufsteuerungsumgebung ist eine erste Funktionseinheit 103 zur Verarbeitung eines Kommunikationsprotokollstapels zugeordnet. Für die Server-Komponenten 111, 121 wird jeweils eine zweite Funktionseinheit 113, 123 zur Verarbeitung eines Kommunikationsprotokollstapels verfügbar gemacht, die mit der ersten Funktionseinheit 103 verbunden ist. Insbesondere umfassen die den Server-Komponenten 111, 121 zugeordneten zweiten Funktionseinheiten jeweils einen virtuellen IP-Stack 113, 123, der mit einem von der ersten Funktionseinheit umfassten IP-Stack 103 bzw. mit einem virtuellen Switch 104 verbunden ist. Im vorliegenden Ausführungsbeispiel wird der virtuelle Switch 104 mittels des der Ablaufsteuerungsumgebung 102 zugeordneten IP-Stack 103 gebildet.

Die Ablaufsteuerungsumgebung 102 wird mittels der Server-Einrichtung 100 bereitgestellt und ist dort auf als Anwendung auf einem Host-Betriebssystem 101 der Server-Einrichtung 100 installiert. Darüber hinaus können Ablaufsteuerungskomponenten jeweils von der Server-Einrichtung 100 auf eine andere Server-Einrichtung zur dortigen Ausführung migriert bzw. auf anderen Server-Einrichtungen zeitgleich ausgeführt werden. Im vorliegenden Ausführungsbeispiel sind bzw. umfassen die Ablaufsteuerungskomponenten Software-Container, die jeweils innerhalb einer von anderen Software-Containern, Container-Gruppen bzw. Pods isolierten Ablaufsteuerungsumgebung auf dem Host-Betriebssystem 101 der Server-Einrichtung 100 ablaufen. Dabei nutzen die Software-Container jeweils gemeinsam mit anderen auf der Server-Einrichtung 100 ablaufenden Software-Containern einen Kernel des Host-Betriebssystems 101 der Server-Einrichtung 100.

Eine Isolation der Ablaufsteuerungskomponenten und der virtuellen Hosts 110, 120, 130 bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

Zur Ermittlung mittels der Ablaufsteuerungsumgebung 102 bereitgestellter Dienste umfassen die Dienste jeweils eine Verzeichnisdienst-Komponente 112, 122. Die Verzeichnisdienst-Komponenten 112, 122 sind miteinander über eine Kommunikationsschnittstelle verbunden 105, die vom IP-Stack 103 bzw. virtuellen Switch 104 separiert ist. Mit der separierten Kommunikationsschnittstelle 105 ist außerdem eine Aggregator-Komponente 131 verbunden, die mittels einer weiteren Ablaufsteuerungskomponente gebildet wird und die Angaben über die mittels der Server-Komponenten 111, 121 bereitgestellten Dienste außerhalb der Ablaufsteuerungsumgebung 102 bzw. außerhalb der Server-Einrichtung 100 verfügbar macht. Diese Angaben können insbesondere durch den Benutzer des Endgeräts 500 abgerufen werden.

Für die Aggregator-Komponente 131 wird eine dritte Funktionseinheit 132 zur Verarbeitung eines Kommunikationsprotokollstapels verfügbar gemacht, die mit dem IP-Stack 103 bzw. virtuellen Switch 104 verbunden ist. Im vorliegenden Ausführungsbeispiel umfasst der virtuelle Host 130 sowohl die Aggregator-Komponente 131 als auch die dritte Funktionseinheit 132. Insbesondere wird der virtuelle Host 130 mittels der weiteren Ablaufsteuerungskomponente gebildet, die der Aggregator-Komponente 131 zugeordnet ist, wenn die weitere Ablaufsteuerungskomponente in die Ablaufsteuerungsumgebung 102 geladen und dort ausgeführt wird.

Vorzugsweise werden in den die Server-Komponenten 111, 121 bildenden Ablaufsteuerungskomponenten jeweils ein virtueller IP-Stack 113, 123 und zumindest eine Server-Komponente 111, 121 gekapselt. Die Verzeichnisdienst-Komponenten 112, 122 werden jeweils mittels einer separaten Ablaufsteuerungskomponente gebildet. Die Verzeichnisdienst-Komponenten 112, 122 werden jeweils erzeugt, wenn für den jeweiligen Dienst erstmals eine Server-Komponente 111, 121 gestartet wird. Im vorliegenden Ausführungsbeispiel werden die virtuellen Hosts 110, 120 mittels der Ablaufsteuerungskomponenten gebildet, die den Server-Komponenten 111, 121 zugeordnet sind, wenn diese Ablaufsteuerungskomponenten jeweils in die Ablaufsteuerungsumgebung 102 geladen und dort ausgeführt werden.

Die Verzeichnisdienst-Komponenten 112, 122 werden vorzugsweise jeweils mittels einer bidirektionalen Kommunikationsverbindung für eine Inter-Prozess-Kommunikation innerhalb der Server-Einrichtung 100 oder mittels einer separaten Transportschicht-Verbindung miteinander bzw. mit einem der Aggregator-Komponente 131 zugeordneten Verzeichnisdienst-Client verbunden. Auf dieser Grundlage können die Verzeichnisdienst-Komponenten 112, 122 untereinander bzw. mit dem Verzeichnisdienst-Client Angaben jeweils ermittelte Dienste abgleichen. Dabei macht der Verzeichnisdienst-Client die abgeglichenen Angaben über die mittels der Server-Komponenten 111, 121 bereitgestellten Dienste außerhalb der Ablaufsteuerungsumgebung 102 verfügbar.

Insbesondere sind die bidirektionalen Kommunikationsverbindungen für die Inter-Prozess-Kommunikation bzw. die Transportschicht-Verbindungen durch die vom IP-Stack 103 bzw. virtuellen Switch 104 separierte Kommunikationsschnittstelle 105 umfasst. Auf diese Weise bildet die separierte Kommunikationsschnittstelle 105 einen Seitenkanal zu einer Kommunikation der Server-Komponenten 111, 121 mit der Ablaufsteuerungsumgebung 102.

Außerdem umfasst die in der Figur dargestellte Anordnung eine der Server-Einrichtung 100 beispielsweise innerhalb des Rechner-Clusters zugeordnete Überwachungseinrichtung 300. Die Überwachungseinrichtung 300 erfasst mittels entsprechender Überwachungsaufträge 301 ein Anlegen, ein Löschen bzw. eine Änderung der Ablaufsteuerungskomponenten bzw. von die Ablaufsteuerungskomponenten umfassenden Kubernetes-Pods und registriert die Dienste bzw. Steuerungs- und Überwachungsanwendungen mit ihrem jeweils zurückgemeldeten Ausführungsstatus 302. Vorzugsweise ist die Überwachungseinrichtung 300 als Kubernetes-API-Server ausgestaltet. Im vorliegenden Ausführungsbeispiel umfasst das Anlegen, das Löschen bzw. die Änderung der Ablaufsteuerungskomponenten insbesondere jeweils ein Allokieren oder Freigeben von Ressourcen in der jeweiligen Server-Einrichtung.

## Patentansprüche

1. Verfahren zur Bereitstellung von zeitkritischen Diensten, bei dem
- den Diensten jeweils zumindest eine Server-Komponente (111, 121) zugeordnet ist, die durch eine in eine Ablaufsteuerungsumgebung (102) ladbare und dort ausführbare Ablaufsteuerungskomponente gebildet wird, wobei der Ablaufsteuerungsumgebung eine erste Funktionseinheit (103) zur Verarbeitung eines Kommunikationsprotokollstapels zugeordnet ist,
- für die Server-Komponenten jeweils eine zweite Funktionseinheit (113, 123) zur Verarbeitung eines Kommunikationsprotokollstapels verfügbar gemacht wird, die mit der ersten Funktionseinheit verbunden ist,
- die Dienste jeweils eine Verzeichnisdienst-Komponente (112, 122) zur Ermittlung mittels der Ablaufsteuerungsumgebung bereitgestellter Dienste umfassen, wobei die Verzeichnisdienst-Komponenten miteinander über eine Kommunikationsschnittstelle (105) verbunden werden, die von der ersten Funktionseinheit separiert ist,
- mit der separierten Kommunikationsschnittstelle (105) eine mittels einer weiteren Ablaufsteuerungskomponente gebildete Aggregator-Komponente (131) verbunden ist, die Angaben über die mittels der Server-Komponenten bereitgestellten Dienste außerhalb der Ablaufsteuerungsumgebung verfügbar macht.

2. Verfahren nach Anspruch 1,
bei dem für die Aggregator-Komponente (131) eine dritte Funktionseinheit (132) zur Verarbeitung eines Kommunikationsprotokollstapels verfügbar gemacht wird, die mit der ersten Funktionseinheit (103) verbunden ist.

3. Verfahren nach einem der Ansprüche 1 oder 2,
bei dem die zweiten Funktionseinheiten jeweils einen virtuellen IP-Stack (113, 123) umfassen, der mit einem von der ersten Funktionseinheit umfassten IP-Stack (103) und/oder virtuellen Switch (104) verbunden ist.

4. Verfahren nach einem der Ansprüche 1 bis 3,
bei dem in den die Server-Komponenten bildenden Ablaufsteuerungskomponenten jeweils eine zweite Funktionseinheit (113, 123) und zumindest eine Server-Komponente (111, 121) gekapselt sind und bei dem die Verzeichnisdienst-Komponenten (112, 122) jeweils mittels einer separaten Ablaufsteuerungskomponente gebildet werden.

5. Verfahren nach Anspruch 4,
bei dem die Verzeichnisdienst-Komponenten (112, 122) jeweils erzeugt werden, wenn für den jeweiligen Dienst erstmals eine Server-Komponente (111, 121) gestartet wird.

6. Verfahren nach einem der Ansprüche 1 bis 5,
bei dem die Verzeichnisdienst-Komponenten jeweils mittels einer bidirektionalen Kommunikationsverbindung für eine Inter-Prozess-Kommunikation innerhalb einer Datenverarbeitungseinrichtung oder mittels einer separaten Transportschicht-Verbindung miteinander und/oder mit einem der Aggregator-Komponente zugeordneten Verzeichnisdienst-Client verbunden sind und bei dem die Verzeichnisdienst-Komponenten untereinander und/oder mit dem Verzeichnisdienst-Client Angaben über jeweils ermittelte Dienste abgleichen.

7. Verfahren nach Anspruch 6,
bei dem die separierte Kommunikationsschnittstelle die bidirektionalen Kommunikationsverbindungen für die Inter-Prozess-Kommunikation und/oder die Transportschicht-Verbindungen umfasst, wobei die separierte Kommunikationsschnittstelle einen Seitenkanal zu einer Kommunikation der Server-Komponenten mit der Ablaufsteuerungsumgebung bildet.

8. Verfahren nach einem der Ansprüche 6 oder 7,
bei dem der Verzeichnisdienst-Client die abgeglichenen Angaben außerhalb der Ablaufsteuerungsumgebung bereitstellt.

9. Verfahren nach einem der Ansprüche 1 bis 8,
bei dem die Ablaufsteuerungsumgebung (102) mittels einer Server-Einrichtung (100) bereitgestellt wird, bei dem die Ablaufsteuerungskomponenten jeweils von der Server-Einrichtung auf eine andere Server-Einrichtung zur dortigen Ausführung migrierbar und/oder auf anderen Server-Einrichtungen zeitgleich ausführbar sind.

10. Verfahren nach Anspruch 9,
bei dem eine mehreren Server-Einrichtungen zugeordnete Überwachungseinrichtung (300) ein Anlegen, ein Löschen und/oder eine Änderung der Ablaufsteuerungskomponenten erfasst und die Dienste mit ihrem jeweiligen Ausführungsstatus registriert und bei dem das Anlegen, das Löschen und/oder die Änderung der Ablaufsteuerungskomponenten jeweils ein Allokieren oder Freigeben von Ressourcen in der jeweiligen Server-Einrichtung umfasst.

11. Verfahren nach einem der Ansprüche 1 bis 10,
bei dem die Ablaufsteuerungskomponenten Software-Container sind oder umfassen, die jeweils innerhalb einer von anderen Software-Containern oder Container-Gruppen isolierten Ablaufsteuerungsumgebung auf einem Host-Betriebssystem einer Server-Einrichtung ablaufen.

12. Verfahren nach Anspruch 11,
bei dem die Software-Container jeweils gemeinsam mit anderen auf der jeweiligen Server-Einrichtung ablaufenden Software-Containern einen Kernel des Host-Betriebssystems der Server-Einrichtung nutzen.

13. Verfahren nach einem der Ansprüche 11 oder 12,
bei dem Speicherabbilder für die Software-Container aus einem durch eine Vielzahl von Nutzern lesend und/oder schreibend zugreifbaren Speicher- und Bereitstellungssystem abrufbar sind.

14. Verfahren nach einem der Ansprüche 1 bis 13,
bei dem mittels der Server-Komponenten Dienste und/oder Funktionen eines industriellen Automatisierungssystems bereitgestellt werden.

15. Verfahren nach Anspruch 14,
bei dem die Dienste jeweils mehrere gleichartige oder identische Server-Komponenten umfassen, die jeweils durch unterschiedliche Server-Einrichtungen bereitgestellt werden.

16. System zur Bereitstellung von zeitkritischen Diensten mit
- einer Ablaufsteuerungsumgebung (102),
- einer der Ablaufsteuerungsumgebung zugeordneten ersten Funktionseinheit (103) zur Verarbeitung eines Kommunikationsprotokollstapels,
- mehreren, jeweils einem Dienst zugeordneten Server-Komponenten (111, 121), die jeweils durch eine in die Ablaufsteuerungsumgebung ladbare und dort ausführbare Ablaufsteuerungskomponente gebildet sind, wobei die Server-Komponenten jeweils mit einer zugeordneten zweiten Funktionseinheit (112, 122) zur Verarbeitung eines Kommunikationsprotokollstapels verbunden sind, die mit der ersten Funktionseinheit verbunden ist,
- mehreren, jeweils einem Dienst zugeordneten Verzeichnisdienst-Komponenten (112, 122) zur Ermittlung mittels der Ablaufsteuerungsumgebung bereitgestellter Dienste, wobei die Verzeichnisdienst-Komponenten miteinander über eine von der ersten Funktionseinheit (103) separierte Kommunikationsschnittstelle (105) verbunden sind,
- einer mittels einer weiteren Ablaufsteuerungskomponente gebildeten Aggregator-Komponente (131), die mit der separierten Kommunikationsschnittstelle verbunden und dafür ausgestaltet und eingerichtet ist, Angaben über die mittels der Server-Komponenten bereitgestellten Dienste außerhalb der Ablaufsteuerungsumgebung verfügbar zu machen.
